# EUROPÄISCHE PATENTSCHRIFT

(11) **EP 3 022 117 B1**
(45) Veröffentlichungstag und Bekanntmachung des Hinweises auf die Patenterteilung: **12.12.2018**
(21) Anmeldenummer: 14727411.2
(22) Anmeldetag: 30.04.2014
(51) Int. Cl.: A47L 1/02, A63H 27/00, B64C 27/08, B64C 25/16, B64C 39/02, E04G 23/00

(54) **AUTOMATISIERTES UND FLEXIBEL EINSETZBARES SELBSTKLETTERNDES FAHRWERK MIT FLUGEIGENSCHAFTEN**
AUTOMATIC, FLEXIBLY USABLE SELF-CLIMBING UNIT WITH FLYING CAPABILITY
MÉCANISME DE ROULEMENT AUTOMATISÉ AUTO-GRIMPANT APTE AU VOL ET POLYVALENT

(30) Priorität: 30.04.2013 DE 102013104447
(43) Veröffentlichungstag der Anmeldung: 25.05.2016
(73) Patentinhaber: Niederberger Engineering AG, 6370 Oberdorf (CH)
(72) Erfinder: NIEDERBERGER, Anton, CH-6370 Oberdorf NW (CH)
(74) Vertreter: Weissfloh, Ingo
(86) Internationale Anmeldenummer: PCT/EP2014/058929
(87) Internationale Veröffentlichungsnummer: WO 2014/177661

(56) Entgegenhaltungen:
- EP-A1- 0 401 120
- EP-A2- 2 003 057
- CN-A- 101 382 426
- CN-A- 101 537 777
- DE-A1-102005 020 593
- DE-A1-102007 003 458
- DE-B3-102009 047 991
- DE-U1-202012 100 128
- US-A1- 2002 119 726
- US-A1- 2003 048 081
- US-A1- 2012 226 394

## Beschreibung

Die Erfindung betrifft ein automatisiertes und flexibel einsetzbares, selbstkletterndes Fahrwerk gekoppelt mit einem Multicopter, welches in der Lage ist, selbstständig von einer Ausgangstelle eine zu reinigende oder zu inspizierende Fläche zu erreichen, diese Fläche zu reinigen, zu inspizieren oder zu warten und danach wieder an eine Ausgangstelle zurückzukehren.

Als nächstliegender Stand der Technik ist die dem Oberbegriff entsprechende WO 2010 083619 A1 zu nennen, bei welcher eine mit einem Luftschiff gekoppelte Fassadereinigungsanlage beschrieben wird. Nachteilig ist, dass diese Lösung auf Grund der baulichen Größe nur außerhalb von Gebäuden zum Einsatz kommen kann. Weiterhin ist der Betrieb nur aufwändig umzusetzen. Wegen der besonderen konstruktiven Gegebenheit ist diese Lösung zudem besonders anfällig gegen Wind.

Weiter sind Fassadenliftanlagen für den universellen Einsatz bekannt, bei welchen Kabinen an auf dem Dach oder unter der Decke des jeweiligen Gebäudes befindlichen Kränen hängen und an diesen an der Fassade herabgelassen oder nach oben gezogen werden. Sie besitzen den Nachteil, dass die zum Betreiben der Fassadenliftanlage notwendigen Komponenten aufwändig zu errichten und zu warten sind. Zudem lassen sich diese insbesondere innerhalb des Gebäudes nur aufwändig verbergen. Weiterhin lassen sich solche Fassadenreinigungsanlagen nur an lotrechten Fassaden einsetzen. Schwer zugängliche Stellen lassen sich nur äußert aufwändig erreichbar. Zudem sind gegebenenfalls manuelle Aufbauten notwendig. Vor allem schräge Flächen oder Flächen mit Überhang lassen sich mit Fassadenliftanlagen nicht erreichen.

Auch Anlagen, welche an langen Auslegern angeordnet sind und an Fassaden innerhalb und außerhalb von Gebäuden zum Einsatz kommen können, besitzen den Nachteil, dass diese nur aufwändig umsetzbar sind und nur einen begrenzten Aktionsradius besitzen.

Aufgabe der Erfindung ist es daher, ein automatisiertes und flexibel einsetzbares, selbstkletterndes Fahrwerk mit Flugeigenschaften zu schaffen, welches automatisch eine geeignete Fläche für Reinigungszwecke, Reparaturzwecke, Beschichtungsprozesse , Druckprozesse sowie Überwachungszwecke erreicht ohne dabei ständig mit einer Versorgungsstation oder Basisstation verbunden zu sein und sich selbstständig zu der Fläche der Fassade hin begibt, sich selbstständig auf der Fläche fortbewegt und sich von dieser weg begibt.

Mit der Erfindung wird im angegebenen Anwendungsfall erreicht, dass ein automatisiertes und flexibel einsetzbares, selbstkletterndes Fahrwerk geschaffen wird, wobei das selbstkletternde Fahrwerk an einem Multicopter angeordnet ist und somit mit Hilfe des Multicopters nahezu jede Stelle einer beliebigen Fläche erreicht. Hierdurch lassen sich sowohl innerhalb als auch außerhalb des Hauses schwer zugängliche Flächen erreichen, welche bisher nicht oder nur mit erheblichen Aufwand erreichbar waren. Mit Hilfe dieser Anordnung lassen sich vielfältige Anwendungen umsetzen und Tätigkeiten durchführen. Zudem besitzen Multicopter mit zwei, drei oder mehr Rotoren oder Propellern gute Flugeigenschaften, welche einen einfachen und sicheren Flug des selbstkletternden Fahrwerks gewährleisten. Weiterhin sind eine sichere Landung sowie Platzierung des selbstkletternden Fahrwerks an oder auf der jeweiligen Fläche sicher möglich. Multicopter besitzen zudem ein geringes Eigengewicht. Sie sind durch eine geeignete Ansteuerung in der Lage, stabilisierend auf das selbstkletternde Fahrwerk einzuwirken, wenn es die äußeren Gegebenheiten erfordern.

Vorteilhafte Ausgestaltungen des selbstkletternden Fahrwerks sind in den Ansprüchen 2 bis 10 dargestellt.

Besonders vorteilhaft ist es, wenn erfindungsgemäss das selbstkletternde Fahrwerk und der Multicopter relativ beweglich zueinander sind. Hierdurch ist eine Anpassung der Lage zueinander möglich. Diese Lageanpassung erlaubt es der Anordnung sich an die jeweiligen Gegebenheiten und Standorte anzupassen, beispielsweise bei der Benutzung oder in einem Bereitschaftszustand, um ungünstige Verhältnisse durch Hebelwirkungen oder Windanfälligkeiten zu vermeiden sowie konstruktive Vereinfachungen zu erreichen. Zudem lässt sich die Anordnung platzsparend einsetzen oder aufbewahren, ohne diese zu demontieren.

Zur Erhöhung der Flexibilität in der Bewegung und für die Bewegungsfreiheit ist nach Anspruch 2 das selbstkletternde Fahrwerk an dem Multicopter mittels eines Tragarmes angeordnet. Somit lassen sich besondere Lagen des selbstkletternden Fahrwerks zu einer Fläche und zum Multicopter erreichen, wobei gegenseitige ungünstige Beeinflussungen des selbstkletternden Fahrwerks und des Multicopters vermieden werden.

Indem nach Anspruch 3 an dem selbstkletternden Fahrwerk eine Reinigungseinrichtung, ein Werkzeughalter, eine Montageeinrichtung, Druckvorrichtungen, Beschichtungsvorrichtungen sowie Mittel zur visuellen Überwachung vorhanden sind oder montiert werden, lassen sich unterschiedliche Aufgaben erfüllen, ohne dass ein aufwändiger Umbau stattfinden muss. Die genannten Hilfsmittel lassen sich problemlos mit dem selbstkletternden Fahrwerk kombinieren. Hierdurch erweitert sich der Einsatzbereich der Anordnung erheblich.

Vorteilhaft sind nach Anspruch 4 an dem Multicopter sowie dem selbstkletternden Fahrwerk Vorratsbehälter vorgesehen, welche die Mitnahme der für den jeweiligen Einsatzzweck notwendigen Betriebsstoffe, wie Wasser, Reinigungsmittel sowie Druckluft ermöglichen. Es ist zudem möglich, das mehrere Vorratsbehälter in geeigneter Weise kombiniert oder separat eingesetzt werden, um gegebenenfalls die notwendigen Mengen des jeweiligen Betriebsstoffes mitführen zu können.

Indem nach Anspruch 5 an dem Multicopter sowie dem selbstkletternden Fahrwerk mindestens eine ortflexible sowie ortsfeste Energieversorgung vorgesehen sind, ist im Bedarfsfalle nur ein kurzer Aufenthalt an der Andockstation notwendig, da nur ein Akkumulatoraustausch oder Batterieaustausch erfolgt und ein länger andauernder Ladevorgang vermieden wird. Somit ist der Multicopter mit dem selbstkletternden Fahrwerk schnell wieder einsatzbereit. Die Unterbrechung der Arbeit ist hierbei nur sehr kurz.

Für die Sicherstellung des automatischen und flexiblen Einsatzes ist nach Anspruch 6 eine Andockstation vorhanden.

An dieser Andockstation sind Schnittstellen insbesondere zur Energieversorgung der für den Betrieb notwendigen Akkumulatoren des Multicopters sowie des selbstkletternden Fahrwerks sowie der jeweils eingesetzten Ergänzungen im Betrieb. Weiterhin sind Schnittstellen zur Versorgung des Multicopters sowie des selbstkletternden Fahrwerks je nach Einsatzzweck für Wasser, Reinigungsmittel sowie Druckluft vorhanden, um die Vorratsbehälter entsprechend bedarfsgerecht zu befüllen.

Zum Erreichen einer längeren Betriebszeit und zum Zwischenladen der Akkumulatoren des Multicopters sowie des selbstkletternden Fahrwerks sind nach Anspruch 7 an diesen Photovoltaikmodule vorgesehen. Hierdurch ist es möglich, die Betriebszeit der Anordnung zwischen den Ladezyklen zu verlängern, wodurch die Anordnung länger im Einsatz bleiben kann und somit effizienter arbeitet. Weiterhin lassen sich Engpässe in der Energieversorgung ausgleichen, insbesondere wenn das Nachladen der Akkus sich aus nicht vorhersehbaren Gründen verzögert oder verhindert wird oder zum Erreichen eines bestimmtes Erfolges nicht gewollt ist.

Für einen zuverlässigen Betrieb und zur Erweiterung des Anwendungsgebietes sind nach Anspruch 8 auch an dem Multicopter Mittel für eine audiovisuelle Überwachung vorgesehen. Diese ermöglichen eine Umgebungsüberwachung während des Fluges und gezielte Steuerung des Fluges sowie eine Umgebungsüberwachung während des Einsatzes unabhängig von einer gegebenenfalls am selbstkletternden Fahrwerk vorhandenen audiovisuellen Überwachung.

Vorteilhaft besitzt der Multicopter oder das selbstkletternde Fahrwerk nach Anspruch 9 Mittel zur Positionsbestimmung.

Somit lässt sich der jeweilige Aufenthaltsort sicher erkennen sowie die Anordnung aufspüren. Weiterhin ist es durch die Positionsbestimmung möglich, dass zu Zwecken der Wegeoptimierung anhand der jeweiligen Position nahepositionierte Multicopter für einen bestimmten Einsatzfall bevorzugt werden. Zudem lassen sich die Multicopter gezielt an eine bestimmte Position steuern. Je nach Art der Positionsbestimmung als Absolut- oder Relativpositionsbestimmungssystem sind hochgenau durchzuführende Bewegungen möglich.

Indem nach Anspruch 10 der Multicopter und das selbstkletternde Fahrwerk fernbedienbar bzw. fernsteuerbar sind, ist ein gezielter bedarfsgerechter Einsatz möglich. In Verbindung mit Positionsdaten lassen sich so automatisiert konkrete Koordinaten ansteuern, ohne dass eine andauernde Kontrolle durch Bedienpersonal notwendig ist. Es sind jedoch Korrekturen des automatisierten Ablaufs möglich.

Die erfindungsgemäße Anordnung soll an Hand von Zeichnungen, dargestellt und in den folgenden Ausführungsbeispielen näher beschrieben werden.

Es zeigen:
Fig. 1 und 2 ein hochkant positioniertes selbstkletterndes Fahrwerk angeordnet an einem Multicopter als Quadrocopter in räumlicher Darstellung von oben,
Fig. 3 ein hochkant positioniertes selbstkletterndes Fahrwerk angeordnet an einem Multicopter als Quadrocopter in räumlicher Darstellung von unten,
Fig. 4 ein hochkant positioniertes selbstkletterndes Fahrwerk angeordnet an einem Multicopter als Quadrocopter in seitlicher Ansicht
Fig. 5 ein Multicopter als Quadrocopter mit einem daran angeordneten und dazu längs angeordneten selbstkletternden Fahrwerk in räumlicher Darstellung von oben,
Fig. 6 ein Multicopter als Quadrocopter mit einem daran angeordneten und dazu längs angeordneten selbstkletternden Fahrwerk in seitlicher Ansicht,
Fig. 7 eine Andockstation mit einem Multicopter als Quadrocopter und einem am Quadrocopter angeordneten und zu diesem hochkant positionierten selbstkletternden Fahrwerk,
Fig. 8 und 9 ein Multicopter als Quadrocopter mit einem daran angeordneten und dazu längs angeordneten selbstkletternden Fahrwerk in seitlicher Ansicht an einer Fassade in Arbeitsposition,
Fig. 10 ein Multicopter als Quadrocopter mit einem über einen Tragarm und längs angeordneten selbstkletternden Fahrwerk in räumlicher Darstellung von oben und
Fig. 11 ein hochkant positioniertes selbstkletterndes Fahrwerk über einen Tragarm an einem Multicopter als Quadrocopter angeordnet in räumlicher Darstellung von oben.

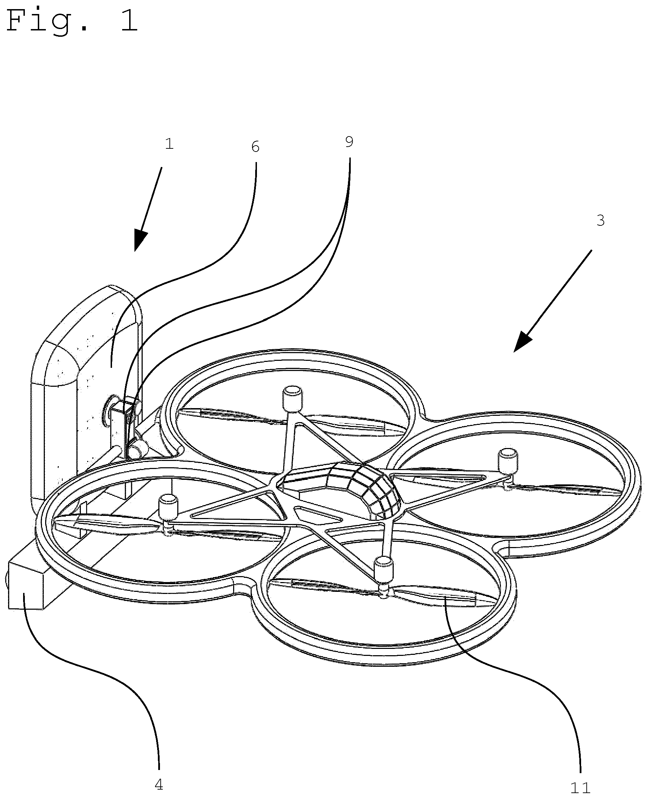

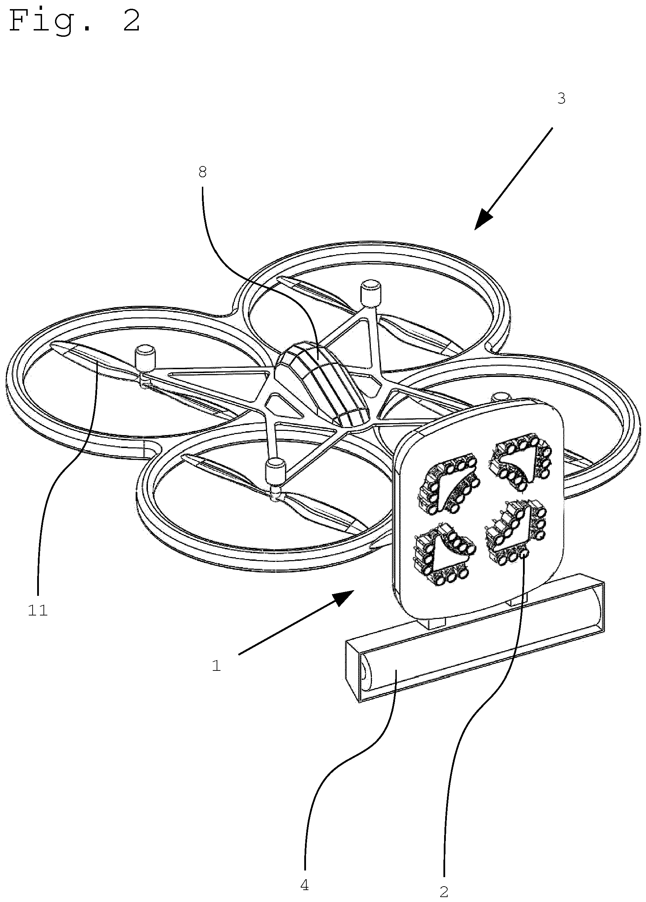

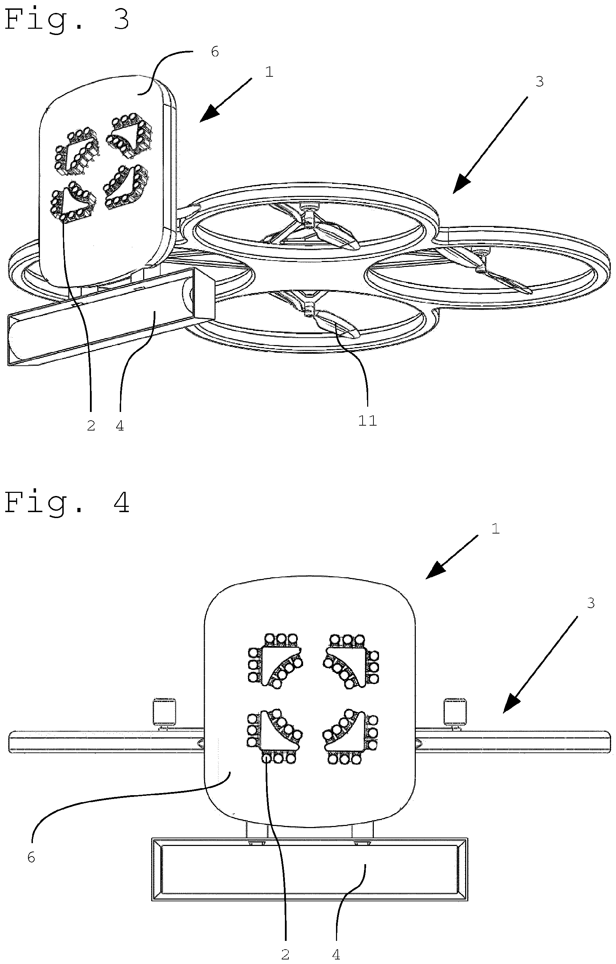

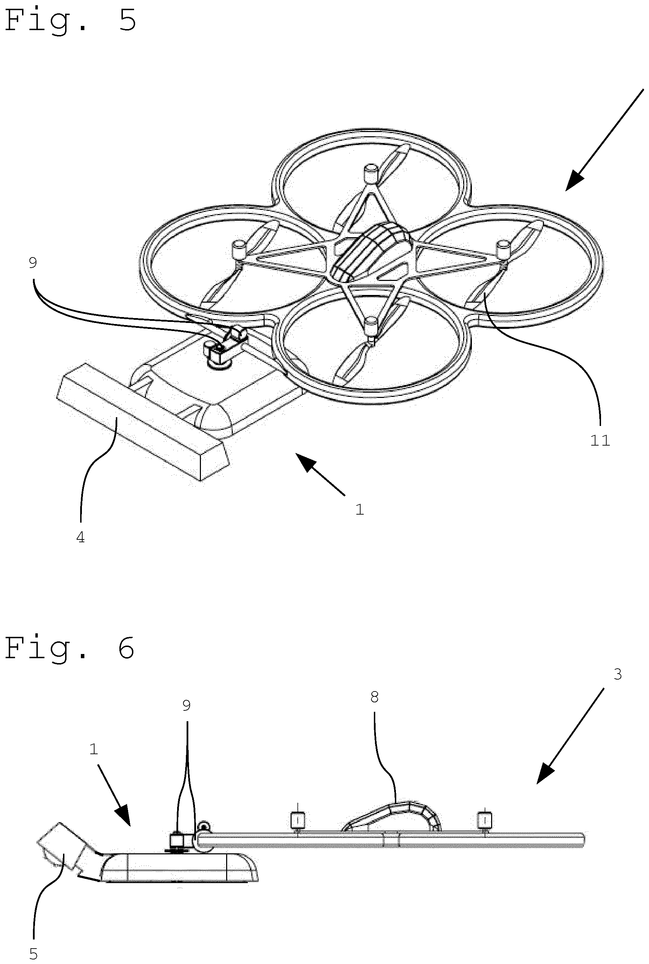

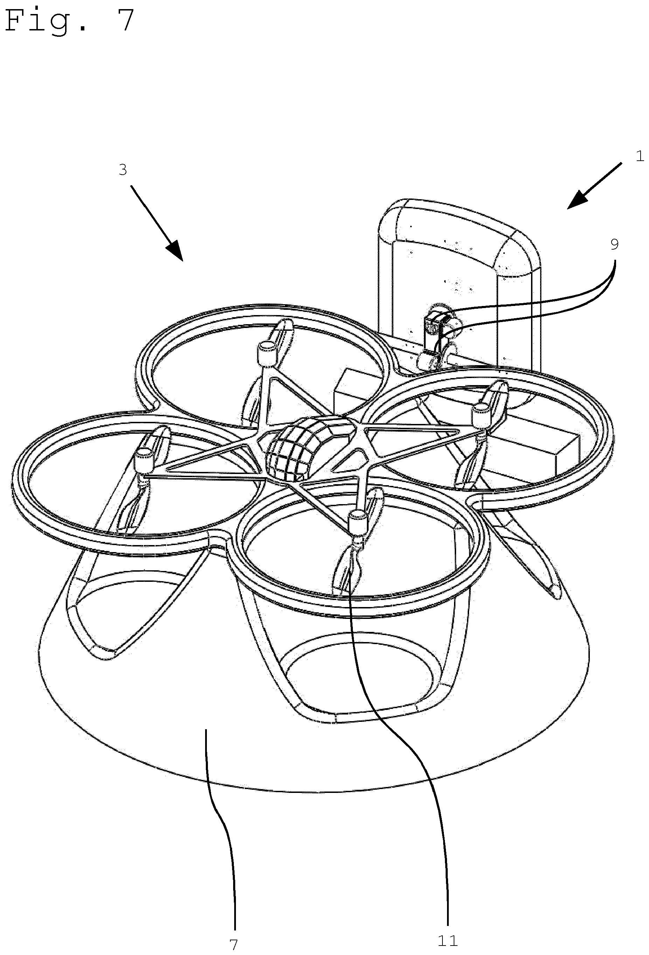

Das erfindungsgemäße automatisierte und flexibel einsetzbare selbstkletternde Fahrwerk 1 mit Vakuumansaugeinheiten 2 ist an einem Multicopter 3 angeordnet. Dieser Multicopter 3 ist, wie in den Figuren 1 bis 3, 5 und 7 dargestellt, aufgrund der guten Flugeigenschaften ein Quadrocopter. Geeignet sind jedoch auch andere Multicopter 3 mit zwei, drei oder mehr Rotoren 11 oder Propellern 11 wie beispielsweise Bicopter, Tricopter und Sixcopter, Octocopter oder andere mehrzahlige Multicopter. Je nach Anforderungen und den zu tragenden Lasten sind die jeweiligen Multicopter 3 auszuwählen. Der Multicopter 3 und das selbstkletternde Fahrwerk 1 sowie daran angeordnete Hilfsmittel werden durch Batterien oder Akkumulatoren mit Energie versorgt.

Das selbstkletternde Fahrwerk 1 ist mittels zweier unabhängig voneinander motorisch angetrieben Drehgelenke 9 an dem Multicopter 3 angeordnet. Die Drehgelenke 9 ist hierbei so angeordnet, dass deren Rotationsachsen im rechten Winkel zueinander stehen. Die Anordnung aus dem selbstkletternden Fahrwerk 1 und dem Multicopter 3 ist somit in der Lage, in nahezu beliebige Stellungen oder Positionen relativ zueinander gestellt zu werden. Somit lassen sich negative Einflüsse auf das Flugverhalten, wie eine Hebelwirkung durch inseitige Lastverteilungen zumindest reduzieren. Dies gilt auch für die Arbeit an der jeweiligen Fläche 10. Hierbei lässt sich der Multicopter 3 so positionieren, dass der Einfluss des Multicopter 3 auf das selbstkletternde Fahrwerk 1 und der Haftwirkung der Vakuumansaugeinheiten 2 an der Fläche 10 verringert wird.

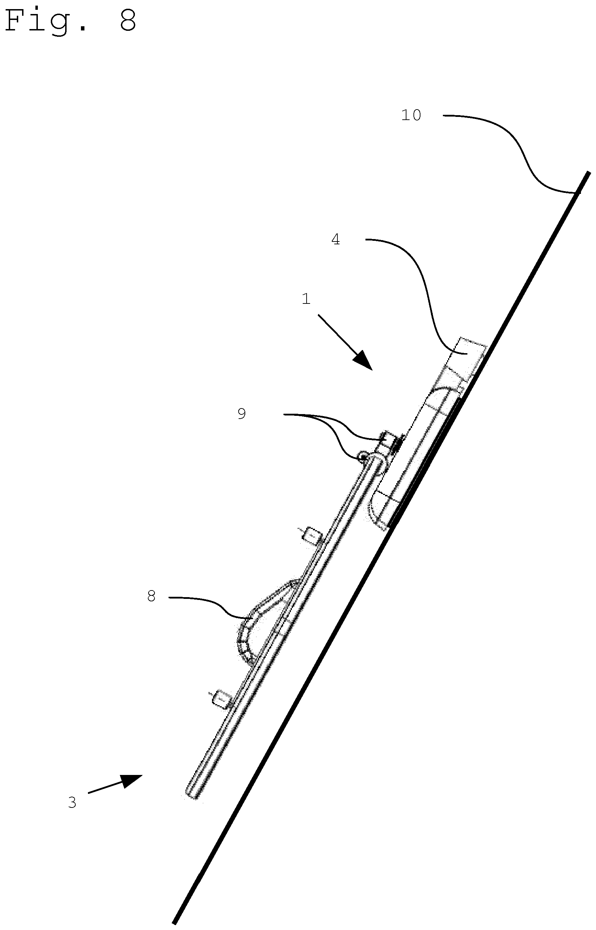

Durch die Anpassung der Lage zwischen dem Multicopter 3 und dem selbstkletternde Fahrwerk 1 lässt sich das selbstkletternde Fahrwerk 1 an die Lage oder Neigung der jeweiligen Fläche 10 oder Fassade 10 so anpassen, dass mit der Annäherung an die Fläche 10 oder Fassade 10 die Vakuumansaugeinheiten 2 des selbstkletternden Fahrwerks 1 in Richtung der Fläche 10 oder Fassade 10 weisen. Mit dem ersten Kontakt saugen die Vakuumansaugeinheiten 2 das selbstkletternde Fahrwerk 1 an die Fläche 10 oder Fassade 10 und übernehmen die weitere Bewegung. Hierbei ist die Ausrichtung der Fläche 10 nahezu beliebig. Lotrechte oder schräge Fassaden 10 lassen sich gleichermaßen erreichen. Eine zuverlässige Übergabe ist jeweils möglich. Die Figur 8 zeigt die Anordnung aus einem Multicopter 3 und einem selbstkletternde Fahrwerk 1 an einer schrägen Fassade 10.

Da durch den Multicopter 3 das selbstkletternde Fahrwerk 1 an nahezu beliebige Stellen einer beliebigen Fläche 10 transportiert werden kann, lassen sich an diesen Stellen unterschiedliche Arbeiten oder Tätigkeiten durchführen. So ist es vorgesehen, dass ein vorgegebener Flächenabschnitt gereinigt wird oder dass an diesem Wartungsarbeiten, Reparaturarbeiten oder audiovisuelle Inspektionsarbeiten durchgeführt werden. Die für die jeweiligen Arbeiten und Tätigkeiten notwendigen Werkzeuge oder Hilfsmittel lassen sich problemlos an dem selbstkletternden Fahrwerk 1 montieren. Vorgesehene Vorratsbehälter 6 für Reinigungsmittel oder Wasser lassen sich bedarfsgerecht auch für die Durchführung von Reparaturarbeiten für die Aufnahme von Material oder für Werkzeuge in Form eines Werkzeughalters 4 oder einer Montageeinrichtung 4 umrüsten. Zudem sind auch Druckluftgefäße für Reinigungszwecke vorgesehen. Es ist jedoch auch möglich, überschüssige Druckluftreserven für gegebenenfalls eingesetzte Venturi-Vakuumansaugeinheiten 2 einzusetzen und an diese weiterzuleiten.

Weiterhin lässt es das um den Multicopter 3 erweiterte oder ergänzte selbstkletternde Fahrwerk 1 dazu einsetzen, gezielt Überwachungen von Gebäuden oder anderen Bereichen durchzuführen. Hierfür ist es vorgesehen, dass zumindest das selbstkletternde Fahrwerk 1 eine Überwachungskamera 5 sowie ein Mikrophon besitzt. Über eine Drahtlosnetzwerkverbindung wie ein LAN oder das Mobilfunknetz lassen sich im Bedarfsfall der Multicopter 3 und das selbstkletternde Fahrwerk 1 fernsteuern und es werden die Bilddaten und Tondaten an den Fernbedienenden oder eine Überwachungsstelle übertragen. Zudem sind Mittel der visuellen und akustischen Erfassung auch am Multicopter 3 vorgesehen. Hierdurch wird die manuelle und entfernte ferngesteuerte Navigation ermöglicht und zumindest vereinfacht. Die Navigation und Lageüberwachung werden zudem durch die vorhandenen Mittel zur Positionsbestimmung vereinfacht. Hierdurch ist ein automatisierter ferngesteuerter Betrieb möglich. Je nach eingesetztem Positionierungssystem lassen sich genaueste Standortdaten und Bewegungsdaten erfassen. Somit ist im Bedarfsfall eine vollautomatisierte Navigation möglich. Mittels der Positionierungsdaten ist insbesondere bei sehr unübersichtlichen örtlichen Gegebenheiten eine Überwachung hinsichtlich des aktuelle Aufenthaltsortes des Multicopters 3 mit selbstkletterndem Fahrwerk 1 möglich. Zum Aufladen der Batterien oder Akkumulatoren sowie zum Nachfüllen der Vorratstanks 6 oder zum Bestücken mit Werkzeug oder Material ist eine Andockstation 7 vorhanden. Sowie der Ladezustand der Batterien oder Akkumulatoren einen kritischen Wert erreicht oder schon unterschritten hat, fliegt der Multicopter 3 unter Zuhilfenahme der Energiereserven unverzüglich zur Andockstation 7. Gleiches gilt, wenn der Vorratstank 6 oder die Batterien oder Akkumulatoren des selbstkletternden Fahrwerks 1 leer oder zumindest weit entleert oder entladen sind. An der Andockstation 7 werden der Multicopter 3 und das selbstkletternde Fahrwerk 1 wieder für den Betrieb aufbereitet.

An der Andockstation 7 lassen sich die festinstallierten ortsfesten Batterien oder Akkumulatoren automatisiert aufladen. Die Batterien oder Akkumulatoren sind die Energieversorgung der Anordnung aus Multicopter 3 und selbstkletternde Fahrwerk 1. Hierbei sind eine gemeinsame Energieversorgung dieser Anordnung sowie separierte Energieversorgungen jeweils für Multicopter 3 und selbstkletternde Fahrwerk 1 vorgesehen. Für eine besonders kurze Unterbrechung ist alternativ ein automatisierter Wechsel der ortsflexiblen Batterien oder Akkumulatoren gegen eine geladene Batterie oder einen geladenen Akkumulator vorgesehen. So lassen sich die zeitlichen Unterbrechungen im Arbeitsablauf reduzieren. Hierfür lassen sich durch die Andockstation 7 die jeweiligen ortflexiblen Energieversorgungen aus dem Multicopter 3 und dem selbstkletternde Fahrwerk 1 ausklinken und gegen geladene Energieversorgungen ersetzen.

Zum Ausgleich von Energieengpässen und je nach Einsatzort zum Vermeiden von Unterbrechungen für den Wechsel oder das Aufladen der Energieversorgung an der Andockstation sind Photovoltaikmodule 8 vorgesehen. Diese lassen sich sowohl auf dem Multicopter 3 als auch auf dem selbstkletternden Fahrwerk 1 anordnen.

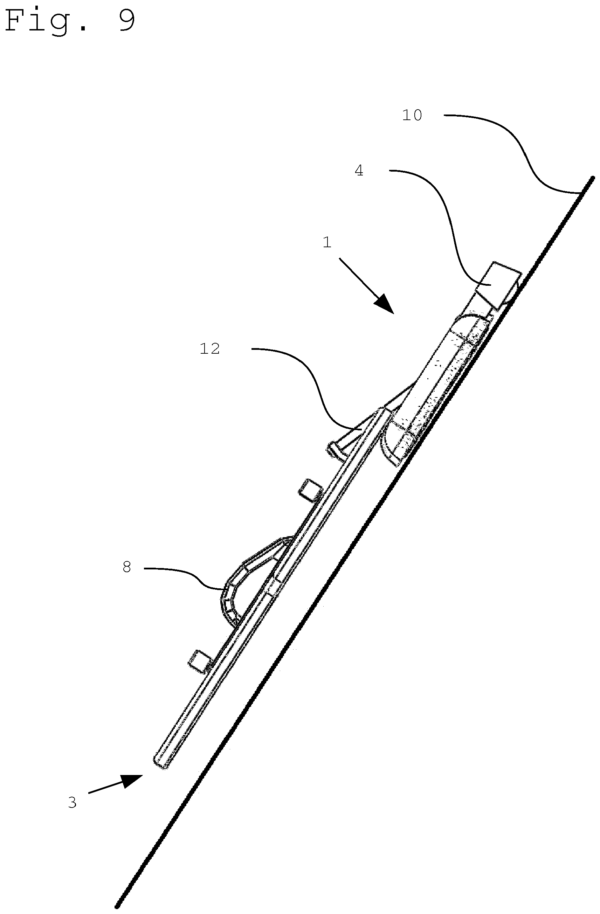

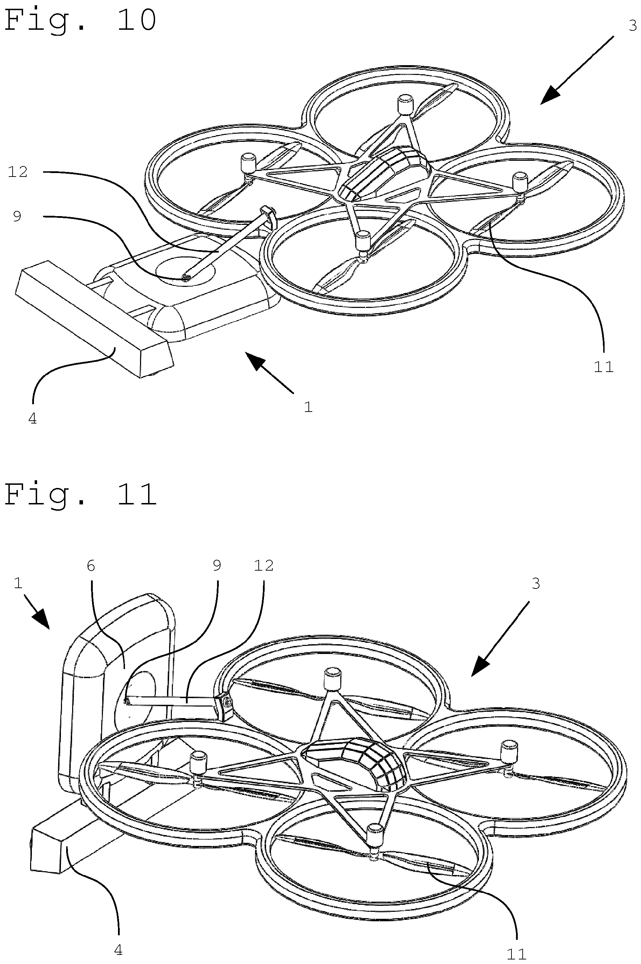

Die Figuren 9 bis 11 zeigen ein selbstkletterndes Fahrwerk 1, welches über einen Tragarm 12 an einem Multicopter 3 als Quadrocopter angeordnet ist. Der Tragarm 12 ist hierbei mittels eines elektromotorisch einstellbaren Kugelgelenks 9 an dem selbstkletternden Fahrwerk 1 angeordnet. Somit lasst sich das selbstkletternde Fahrwerk 1 individuell an die notwendige Lage hinsichtlich der zu bearbeiten Fläche 10 schwenken und drehen. Somit sind Bewegungen des selbstkletternden Fahrwerks 1 auf der Fläche 10 möglich, ohne dass sich die Lage des Multicopters 3 relativ zur Fläche ändert. Hebelwirkungen werden somit auf ein Mindestmaß reduziert. Der Tragarm 12 ist in diesem konkreten Ausführungsbeispiel am Multicopter 3 starr befestigt. Vorgesehen ist es hierbei auch, dass am Multicopter 3 ein Drehgelenk 9 vorhanden ist, um die Lage des selbstkletternden Fahrwerks 1 zum Multicopter 3 noch individueller einzustellen. So ist das Kugelgelenk 9 am selbstkletternden Fahrwerk 1 auch als Drehgelenk 9 ausführbar. Mittels der Anordnung des selbstkletternden Fahrwerks 1 und des Multicopters 3 über den Tragarm 12 lassen sich auch Überkopfanwendungen umsetzen. Hierbei wird das selbstkletternde Fahrwerk 1 über den Multicopter geschwenkt.

### Zusammenstellung der Bezugszeichen

1 - selbstkletterndes Fahrwerk
2 - Vakuumansaugeinheit
3 - Multicopter
4 - Reinigungseinrichtung, Werkzeughalter, Montageeinrichtung, Druckvorrichtungen, Beschichtungsvorrichtungen
5 - visuelle Überwachung, akustische Überwachung
6 - Vorratsbehälter
7 - Andockstation
8 - Photovoltaikmodul
9 - Gelenk, Kugelgelenk, Drehgelenk
10 - Fassade, Fläche
11 - Rotor, Propeller
12 - Tragarm

## Patentansprüche

1. Automatisiertes und flexibel einsetzbares selbstkletterndes Fahrwerk (1) mit Vakuumansaugeinheiten (2),
**dadurch gekennzeichnet,**
- **dass** an dem selbstkletternden Fahrwerk (1) ein Multicopter (3) mit zwei, drei oder mehreren Rotoren (11) oder Propellern (11) angeordnet ist, wobei das selbstkletternde Fahrwerk (1) und der Multicopter (3) mittels mindestens eines Gelenkes (9) relativ beweglich zueinander sind, wobei der Mutlicopter durch eine geeignete Ansteuerung in der Lage ist, stabilisierend auf das selbstkletternde Fahrwerk einzuwirken, wenn es die äußeren Gegebenheiten erfordern.

2. Selbstkletterndes Fahrwerk nach Anspruch 1,
**dadurch gekennzeichnet,**
**dass** das selbstkletternde Fahrwerk (1) mittels mindestens eines Tragarmes (12) an dem Multicopter (3) angeordnet ist.

3. Selbstkletterndes Fahrwerk nach einem der vorhergehenden Ansprüche,
**dadurch gekennzeichnet,**
**dass** an dem selbstkletternden Fahrwerk (1) eine Reinigungseinrichtung (4), ein Werkzeughalter (4), eine Montageeinrichtung (4), Druckvorrichtungen (4), Beschichtungsvorrichtungen (4) und/oder Mittel zur akustischen und/oder visuellen Überwachung (5) vorhanden sind.

4. Selbstkletterndes Fahrwerk nach einem der vorhergehenden Ansprüche,
**dadurch gekennzeichnet,**
**dass** an dem Multicopter (3) und/oder dem selbstkletternden Fahrwerk (1) mindestens ein Vorratsbehälter (6) für Wasser, Reinigungsmittel und/oder Druckluft angeordnet ist.

5. Selbstkletterndes Fahrwerk nach einem der vorhergehenden Ansprüche,
**dadurch gekennzeichnet**,
P130427EPMulticopterLaufwerk
dass der Multicopter (3) und/oder das selbstkletternde Fahrwerk (1) mindestens eine ortsflexible und/oder ortsfeste Energieversorgung besitzen.

6. Selbstkletterndes Fahrwerk nach einem der vorhergehenden Ansprüche in Kombination mit zumindest einer Andockstation (7), **dadurch gekennzeichnet, dass** an der Andockstation (7) Schnittstellen zur Aufladen Energieversorgung, zum Austauschen der Energieversorgung, zur Druckluftversorgung, zur Wasserversorgung, zur Reinigungsmittelversorgung und/oder zum Werkzeugwechsel vorhanden sind.

7. Selbstkletterndes Fahrwerk nach einem der vorhergehenden Ansprüche 1 bis 5,
**dadurch gekennzeichnet,**
**dass** der Multicopter (3) und/oder das selbstkletternde Fahrwerk (1) Photovoltaikmodule (8) besitzt.

8. Selbstkletterndes Fahrwerk nach einem der vorhergehenden Ansprüche 1 bis 5 oder 7,
**dadurch gekennzeichnet,**
**dass** der Multicopter (3) Mittel zur akustischen und/oder visuellen Überwachung besitzt.

9. Selbstkletterndes Fahrwerk nach einem der vorhergehenden Ansprüche 1 bis 5, 7 oder 8,
**dadurch gekennzeichnet,**
**dass** der Multicopter (3) und/oder das selbstkletternde Fahrwerk (1) Mittel zur Positionsbestimmung besitzt.

10. Selbstkletterndes Fahrwerk nach einem der vorhergehenden Ansprüche 1 bis 5 oder 7 bis 9
**dadurch gekennzeichnet,**
**dass** der Multicopter (3) und/oder das selbstkletternde Fahrwerk (1) manuell und/oder automatisiert fernsteuerbar sind.

## Claims

1. Automated and versatile autonomous-climbing undercarriage (1) with vacuum suction units (2),
**characterised in that**
- a multicopter (3) with two, three or more rotors (11) or propellers (11) is arranged on the autonomous-climbing undercarriage (1), where the autonomous-climbing undercarriage (1) and the multicopter (3) move relative to one another by means of a joint (9), where the multicopter has the ability, by means of a suitable control unit, to have a stabilizing effect on the autonomous-climbing undercarriage if it requires external conditions.

2. Autonomous-climbing undercarriage according to claim 1,
**characterised in that**
the autonomous-climbing undercarriage (1) is arranged on the multicopter (3) by means of at least one supporting arm (12).

3. Autonomous-climbing undercarriage according to one of the previous claims,
**characterised in that**
a cleaning device (4), a tool holder (4), an assembly device (4), pressure devices (4), coating devices (4) and/or equipment for acoustic and/or visual monitoring (5) exist on the autonomous-climbing undercarriage (1).

4. Autonomous-climbing undercarriage according to one of the previous claims,
**characterised in that**
at least one storage tank (6) for water, cleaning agent, and/or compressed air is arranged on the multicopter (3) and/or the autonomous-climbing undercarriage (1).

5. Autonomous-climbing undercarriage according to one of the previous claims,
**characterised in that**
the multicopter (3) and/or the autonomous-climbing undercarriage (1) has at least one mobile and/or fixed power supply.

6. Autonomous-climbing undercarriage according to one of the previous claims, in combination with at least one docking station (7),
**characterised in that**
interfaces for charging the power supply, for replacing the power supply, for supplying compressed air, for supplying water, for supplying cleaning agent and/or for replacing tools exist on the docking station (7).

7. Autonomous-climbing undercarriage according to one of the previous claims 1 to 5,
**characterised in that**
the multicopter (3) and/or the autonomous-climbing undercarriage (1) has photovoltaic modules (8).

8. Autonomous-climbing undercarriage according to one of the previous claims 1 to 5 or 7,
**characterised in that**
the multicopter (3) has equipment for acoustic and/or visual monitoring.

9. Autonomous-climbing undercarriage according to one of the previous claims 1 to 5, 7 or 8,
**characterised in that**
the multicopter (3) and/or the autonomous-climbing undercarriage (1) has equipment for positioning.

10. Autonomous-climbing undercarriage according to one of the previous claims 1 to 5, 7 to 9,
**characterised in that**
the multicopter (3) and/or the autonomous-climbing undercarriage (1) can be controlled remotely, manually and/or automatically.

## Revendications

1. Mécanisme de roulement auto-grimpant (1) automatisé et polyvalent à unités d'aspiration par le vide (2),
**caractérisé en ce que**
- sur le mécanisme de roulement auto-grimpant (1) est disposé un multicoptère (3) à deux, trois ou plusieurs rotors (11) ou hélices (11), le mécanisme de roulement auto-grimpant (1) et le multicoptère (3) étant relativement mobiles l'un par rapport à l'autre au moyen d'au moins une articulation (9), le multicoptère étant en mesure d'avoir un effet stabilisant sur le mécanisme de roulement auto-grimpant en le commandant de façon appropriée lorsque les conditions extérieures l'exigent.

2. Mécanisme de roulement auto-grimpant selon la revendication 1,
**caractérisé en ce que**
le mécanisme de roulement auto-grimpant (1) est disposé sur le multicoptère (3) au moyen d'au moins un bras porteur (12).

3. Mécanisme de roulement auto-grimpant selon l'une des revendications précédentes,
**caractérisé en ce que**
un dispositif de nettoyage (4), un porte-outil (4), un dispositif de montage (4), des dispositifs de pression (4), des dispositifs de revêtement (4) et/ou des moyens de surveillance acoustique et/ou visuelle (5) sont prévus sur le mécanisme de roulement auto-grimpant (1).

4. Mécanisme de roulement auto-grimpant selon l'une des revendications précédentes,
**caractérisé en ce que**
au moins un réservoir (6) d'eau, de détergent et/ou d'air comprimé est disposé sur le multicoptère (3) et/ou sur le mécanisme de roulement auto-grimpant (1).

5. Mécanisme de roulement auto-grimpant selon l'une des revendications précédentes,
**caractérisé en ce que**
le multicoptère (3) et/ou le mécanisme de roulement auto-grimpant (1) possèdent au moins une alimentation en énergie mobile et/ou stationnaire.

6. Mécanisme de roulement auto-grimpant selon l'une des revendications précédentes associé à au moins une station d'accueil (7),
**caractérisé en ce que**
la station d'accueil (7) présente des interfaces pour le chargement de l'alimentation en énergie, pour le remplacement de l'alimentation en énergie, pour l'alimentation en air comprimé, pour l'alimentation en eau, pour l'alimentation en détergent et/ou pour le changement d'outil.

7. Mécanisme de roulement auto-grimpant selon l'une des revendications précédentes 1 à 5,
**caractérisé en ce que**
le multicoptère (3) et/ou le mécanisme de roulement auto-grimpant (1) possède des modules photovoltaïques (8).

8. Mécanisme de roulement auto-grimpant selon l'une des revendications précédentes 1 à 5 ou 7,
**caractérisé en ce que**
le multicoptère (3) possède des moyens de surveillance acoustique et/ou visuelle.

9. Mécanisme de roulement auto-grimpant selon l'une des revendications précédentes 1 à 5, 7 ou 8,
**caractérisé en ce que**
le multicoptère (3) et/ou le mécanisme de roulement auto-grimpant (1) possède des moyens de détermination de position.

10. Mécanisme de roulement auto-grimpant selon l'une des revendications précédentes 1 à 5, 7 à 9,
**caractérisé en ce que**
le multicoptère (3) et/ou le mécanisme de roulement auto-grimpant (1) peuvent être commandés à distance en mode manuel et/ou automatique.
